# EUROPEAN PATENT SPECIFICATION

(11) **EP 2 427 931 B1**
(45) Date of publication and mention of the grant of the patent: **09.09.2015**
(21) Application number: 10719607.3
(22) Date of filing: 07.05.2010
(51) Int. Cl.: H01M 8/04, H01M 8/18, H01M 8/00

(54) **FUEL CELLS**
BRENNSTOFFZELLEN
PILES À COMBUSTIBLE

(30) Priority: 07.05.2009 GB 0907795
(43) Date of publication of application: 14.03.2012
(73) Proprietor: Acal Energy Limited, Runcorn Cheshire WA7 4QX (GB)
(72) Inventor: CREETH, Andrew Martin, Cheshire CH2 1DF (GB); WARD, David, Cheshire WA7 4QX (GB)
(74) Representative: Brand, Thomas Louis
(86) International application number: PCT/GB2010/050746
(87) International publication number: WO 2010/128333

(56) References cited:
- EP-A1- 0 043 647
- WO-A2-2007/110663
- US-A- 4 396 687
- US-A- 5 250 158
- US-A- 5 660 940

## Description

The present invention relates to fuel cells, in particular to indirect or redox fuel cells which have applications in stationary, back-up and combined heat and power (chp) contexts, as well as in fuel cells for the automotive industry and in microfuel cells for electronic and portable electronic devices.

Fuel cells have been known for portable applications such as automotive and portable electronics technology for very many years, although it is only in recent years that fuel cells have become of serious practical consideration. In its simplest form, a fuel cell is an electrochemical energy conversion device that converts fuel and oxidant into reaction product(s), producing electricity and heat in the process. In one example of such a cell, hydrogen is used as fuel, and air or oxygen as oxidant and the product of the reaction is water. The gases are fed respectively into catalysing, diffusion-type electrodes separated by a solid or liquid electrolyte which carries electrically charged particles between the two electrodes. In an indirect or redox fuel cell, the oxidant (and/or fuel in some cases) is not reacted directly at the electrode but instead reacts with the reduced form (oxidized form for fuel) of a redox couple to oxidise it, and this oxidised species is fed to the cathode.

There are several types of fuel cell characterised by their different electrolytes. The liquid electrolyte alkali electrolyte fuel cells have inherent disadvantages in that the electrolyte dissolves CO₂ and needs to be replaced periodically. Polymer electrolyte or PEM-type cells with proton-conducting solid cell membranes are acidic and avoid this problem. However, it has proved difficult in practice to attain power outputs from such systems approaching the theoretical maximum level, due to the relatively poor electrocatalysis of the oxygen reduction reaction. In addition expensive noble metal electrocatalysts are often used.

Fuel cell applications in the automotive industry and in connection with chp ideally require efficient transfer of the heat generated in the fuel cell system. In automotive applications it is desirable to transfer heat away from the polymer electrolyte membrane to avoid compromising the electrochemical performance of the membrane, the transferred heat typically being sacrificed from the system. In combined heat and power applications the heat generated in operation of the fuel cell is transferred away from the membrane and then used for a further purpose. In either case the efficiency of heat transfer is a function of the temperature of operation of the cell; a higher operating temperature giving rise to a more efficient transfer of heat. However, as previously stated the feasible operating temperature is limited by the need to preserve the electrochemical properties of the membrane, particularly with regard to proton conduction and durability - properties which will typically be compromised by operating temperatures above about 80°C-95°C, for example. Thus, coolant supplied to the cell, or more commonly to a cell stack, for the purpose of transferring heat away from the membrane will typically exit the cell or stack at a temperature of less than about 95°C for example, sometimes less than 80°C and in any event at a lower temperature than the cell operating temperature. The need to balance the conflicting requirements of membrane heat-sensitivity and the desirability of using the heat generated by the cell in a productive manner gives rise to inefficiencies in cell performance, particularly in automotive applications and in combined heat and power.

WO2007/110663 discloses a redox fuel cell comprising an anode and a cathode separated by an ion selective polymer electrolyte membrane; means for supplying a fuel to the anode region of the cell; means for supplying an oxidant to the cathode region of the cell; means for providing an electrical circuit between the anode and the cathode; a non-volatile catholyte solution flowing fluid communication with the cathode, the catholyte solution comprising a polyoxometallate redox couple being at least partially reduced at the cathode in operation of the cell, and at least partially re-generated by reaction with the oxidant after such reduction at the cathode, the catholyte solution comprising at least about 0.075M of the said polyoxometallate.

US5,660,940 discloses a method for producing electric energy in a biofuel-powered fuel cell, the metal in the first acid metallic salt solution forming a redox pair having a normal potential between -0.1 and 0.7 V and the metal in the second acid metallic salt solution forming a redox pair having a normal potential between 0.7 and 1.3 V, both metals preferably being vanadium which forms the redox pairs vanadium(IV)/(III) and vanadium (V)/(IV), respectively; carbohydrate being supplied as fuel to the first reactor and the reaction in the first reactor being effected in the presence of platinum or ruthenium as the first catalyst.

US4,396,687 discloses a chemically regenerable redox fuel cell in which the oxidant is oxygen and the fuel is hydrogen. A catholyte solution is used, which is reoxidized from a reduced state to an oxidized state by direct exposure of the catholyte solution to oxygen. An anolyte solution is also used, which is reduced from an oxidized state to a reduced state by direct exposure of the catholyte solution to hydrogen. A structure is provided for containing in separate containers the catholyte solution and the anolyte solution, and for providing oxygen to the catholyte solution and hydrogen to the anolyte solution. A suitable cationic exchange membrane is housed in a housing and provided with volumes on opposite sides of the membrane for the catholyte solution and anolyte solution so that the necessary exchanges may take place to form the redox cell. All necessary plumbing and electrical systems are provided to supply the catholyte and anolyte solutions to the cationic exchange membrane and to obtain from the exchange which takes place at the membrane the electrical potential generated.

US5,250,158 discloses a vanadium electrolytic solution containing highly concentrated and dissolved vanadium, produced by a method wherein a vanadium compound selected from the group consisting of ammonium metavanadate and vanadium pentaoxide is subjected to a reduction operation in the presence of inorganic acids. At this time, by repeating the addition of the concentrated inorganic acids and the vanadium compound, a tetravalent and pentavalent vanadium solution of 3.4 mol/l is obtained. In addition, the resulting vanadium electrolytic solution is electrolyzed, whereby tetravalent vanadium is reduced to be trivalent on the negative electrode and is oxidized into pentavalent vanadium on the positive electrode, and then pentavalent vanadium is reduced into tetravalent vanadium by a reducing agent to form a discharged couple of trivalent and tetravalent vanadium, and an electrolytic solution is obtained which is capable of being charge-discharged. This electrolytic solution can be used as the electrolytic solution for redox batteries using vanadium as the active material in both positive and negative electrodes.

EP0043647 discloses an energy conversion process for converting thermal energy into stored electrochemical energy and then into electrical energy, comprising the steps of:
(a) heating a first FeCl2-containing electrolyte melt in an electrochemical charging cell, said melt comprising at least about 10 mole percent FeCl2 to cause a first chemical reaction to take place producing (1) gaseous FeCl3, and (2) a reductant product which is free iron and/or, is when optional metal chloride compounds are present and are reduced in said chemical reaction, the reductant product of said optional reduced metal chloride compounds, the purpose of said other metal chloride compounds being to reduce the freezing point of said melt, increase its electrical conductivity, or provide the source for the reductant product of said reaction, without preventing the discharge of gaseous FeCl3 or the discharge of a complex thereof with other metal chloride compounds, from which complex gaseous FeCl3 can be separated by heating said complex, said cell having electrodes therein and an electrical potential applied across said electrodes when the operating temperature of said cell is between the boiling point of FeCl3 and the boiling point of FeCl2 and when the free energy change for the cell charging reaction is positive,
(b) separating said gaseous FeCl3 and said reductant product of said reaction,
(c) cooling the resulting separated gaseous FeCl3 and reductant product to a temperature lower than the temperature of said reaction,
(d) optionally storing said separated FeCl3 and reductant product, and
(e) combining, at a temperature below that of said charging cell, said separated FeCl3 and reductant product with a second FeCl2-containing electrolyte melt in an electrochemical discharging cell containing electrodes to cause a second chemical reaction to take place which is the reverse of said first reaction, thereby generating said first melt, heat, and electrical energy, said electrical energy being in excess of said consumed electrical energy of step (a) and is derived from the heat absorbed in step (a), said second melt comprising 3 to 33 mole percent FeCl2 and 67 to 97 mole percent of one or more other metal chloride compounds which reduce the freezing point of said discharging melt or increase its electrical conductivity.

It is an object of the present invention to overcome or ameliorate one or more of the aforesaid disadvantages. It is a further object of the present invention to provide an improved redox fuel cell structure for heat management within the fuel cell, bearing in mind the limitations imposed by the heat sensitivity of typical membrane electrode assemblies in general, and the polymer electrolyte membrane components thereof in particular.

Accordingly, the present invention provides a redox fuel cell comprising:
electrode assembly comprising an anode and a cathode separated by an ion selective polymer electrolyte membrane and each membrane electrode assembly comprising an anode chamber adjacent the anode of that assembly and a cathode chamber adjacent the cathode of that assembly;
means for supplying a fuel to the anode chambers of the cell;
means for supplying an oxidant to the cell;
means for providing an electrical circuit between respective anodes and cathodes of the cell;
a catholyte solution comprising at least one non-volatile catholyte component, the catholyte solution comprising a redox mediator couple;
means upstream and/or downstream of the cathode chambers for cooling the catholyte solution; and
a regeneration zone separate from the membrane electrode assemblies, the means for supplying an oxidant to the cell being adapted to supply the oxidant to the regeneration zone, the regeneration zone being maintained in operation of the cell at an operating temperature at least 2°C higher than the cathode chambers of the cell and/or the temperature of the cooled catholyte solution, wherein the volume of catholyte inventory in the regeneration zone is from 25% to 90% of the catholyte inventory in the regeneration zone and the cathode chambers combined.

By "cathode chamber" is meant that part of the cell bounded on one side by the cathode side of the membrane electrode assembly. Alternatively, or as well, the "cathode chamber" may be thought of as that part of the cell in which at least a part of the catholyte flowing therethrough in operation of the cell contacts the cathode side of the membrane electrode assembly.

In operation of the cell the catholyte is provided flowing in fluid communication with each cathode through each cathode chamber.

The redox mediator couple is at least partially reduced at each cathode in operation of the cell, and at least partially re-generated by reaction with the oxidant after such reduction at the cathode. The at least partial regeneration of the redox mediator couple is effected in the regeneration zone.

Also discussed herein is a redox fuel cell comprising:
a plural stack of membrane electrode assemblies, each membrane electrode assembly comprising an anode and a cathode separated by an ion selective polymer electrolyte membrane, and each membrane electrode assembly comprising an anode chamber adjacent the anode of that assembly and a cathode chamber adjacent the cathode of that assembly;
means for supplying a fuel to the anode chambers of the cell;
means for supplying an oxidant to the cell;
means for providing an electrical circuit between respective anodes and cathodes of the cell;
a catholyte solution comprising at least one non-volatile catholyte component flowing in fluid communication with the cathodes, the catholyte solution comprising a redox mediator couple being at least partially reduced at the cathodes in operation of the cell, and at least partially re-generated by reaction with the oxidant after such reduction at the cathodes; and
a regeneration zone separate from the membrane electrode assemblies thereof, the at least partial regeneration of the redox mediator couple being effected in the regeneration zone, and the means for supplying an oxidant to the cell being adapted to supply the oxidant to the regeneration zone, the volume of catholyte solution in the regeneration zone being from about 25% to about 90% of the total combined volume of catholyte solution in the regeneration zone and the cathode chambers.

Preferably the volume of catholyte solution in the regeneration zone is from about 25% to about 85%, more preferably from about 25% to about 80% of the total volume of catholyte solution in the regeneration zone and cathode chambers.

Typically the combined volume of catholyte in the regeneration zone and in the cathode chambers is the total volume of catholyte in the fuel cell, minus the volume which is present in any associated pump, catholyte reservoir, heat exchanger, pipe-work, and any other ancillary part of the cell.

Generally, maintaining a relatively low inventory of catholyte solution in the regeneration zone allows the operator of the cell to maintain the regeneration zone at a higher temperature than the catholyte region, and then to use the heat generated in the regeneration zone for a useful purpose. In some embodiments of the invention it may be desirable to cool the catholyte between the cathode chambers and the regeneration zone, for example by means of a suitable heat exchanger, in which case the regeneration zone may not be maintained at a higher temperature than the temperature of the cathode chambers (although it may be), but will at least be maintained at a higher temperature than the cooled catholyte. Typically in the case the catholyte will be cooled upstream of the regeneration zone and downstream of the cathode chambers, although it may also or instead be cooled downstream of the regeneration zone and upstream of the cathode chambers.

Hence, the present invention also provides a redox fuel cell comprising:
a plural stack of membrane electrode assemblies, each membrane electrode assembly comprising an anode and a cathode separated by an ion selective polymer electrolyte membrane, and each membrane electrode assembly comprising an anode chamber adjacent the anode of that assembly and a cathode chamber adjacent the cathode of that assembly;
means for supplying an oxidant to the cell;
means for providing an electrical circuit between respective anodes and cathodes of the cell;
a catholyte solution comprising at least one non-volatile catholyte component, the catholyte solution comprising a redox mediator couple;
means upstream and/or downstream of the cathode chambers for cooling the catholyte solution; and
a regeneration zone separate from the membrane electrode assemblies, the means for supplying an oxidant to the cell being adapted to supply the oxidant to the regeneration zone, the regeneration zone being maintained in operation of the cell at an operating temperature at least 2°C higher than the cathode chambers of the cell and/or the temperature of the cooled catholyte solution.

The volume of catholyte solution in the regeneration zone in this case is from about 25% to about 90% of the total combined volume of catholyte solution in the regeneration zone and the cathode chambers.

Similarly, the present invention also provides a process for operating a redox fuel cell comprising:
providing a plural stack of membrane electrode assemblies, each membrane electrode assembly comprising an anode and a cathode separated by an ion selective polymer electrolyte membrane, and each membrane electrode assembly comprising an anode chamber adjacent the anode of that assembly and a cathode chamber adjacent the cathode of that assembly;
providing a catholyte solution comprising at least one non-volatile catholyte component, the catholyte solution comprising a redox mediator couple; and
providing a regeneration zone separate from the membrane electrode assemblies;
providing means between the cathode chambers and the regeneration zone for cooling the catholyte solution;
supplying an oxidant to the regeneration zone;
supplying a fuel to the anode chambers of the cell;
providing an electrical circuit between respective anodes and cathodes of the cell; and
maintaining the regeneration zone at an operating temperature at leats 2°C higher than the cathode chambers of the cell and/or the temperature of the cooled catholyte solution.

Preferably the volume of catholyte solution in the regeneration zone in this method is from about 25% to about 90% of the total combined volume of catholyte solution in the regeneration zone and the cathode chambers.

Preferably, the method of the invention comprises transferring heat away from the regeneration zone of the cell and optionally using that heat for another purpose.

Also discussed herein is a redox fuel cell comprising an anode and a cathode separated by an ion selective polymer electrolyte membrane; means for supplying a fuel to the anode region of the cell; means for supplying an oxidant to the cell; means for providing an electrical circuit between the anode and the cathode; a catholyte solution comprising at least one non-volatile catholyte component flowing in fluid communication with the cathode, the catholyte solution comprising a redox mediator couple being at least partially reduced at the cathode in operation of the cell, and at least partially re-generated by reaction with the oxidant after such reduction at the cathode, the at least partial regeneration of the redox mediator couple being effected in a regeneration zone of the cell separate from the cathode region thereof and the means for supplying an oxidant to the cell being adapted to supply the oxidant to the regeneration zone, the regeneration zone being maintained in operation of the cell at an operating temperature at least 2°C higher than the cathode region of the cell.

Alternatively, where a cooling means such as a heat exchanger is provided between the cathode chambers and the regeneration zone, the operating temperature of the regeneration zone may not necessarily be higher than that of the cathode region of the cell, but will at least be maintained to be higher than the temperature of the catholyte solution exiting the cooling means.

Heat generated in the cell by the regeneration reaction varies depending upon the nature of the redox mediator couple, the presence or absence of an accompanying redox catalyst, the nature of the oxidant, the physical structure of the cell and a number of other factors. However, we have found that typically the temperature of the catholyte solution when the regeneration reaction occurs may be in excess of that which would typically be a desirable temperature to which to expose the polymer electrolyte membrane. Thus, temperatures in excess of the temperature of operation of the cell, or in excess of the operation of the cell by 5°C, or in excess by 10°C or even in excess by 15°C may be produced in the catholyte solution during the regeneration reaction. That is to say the temperature of the regeneration zone during operation of the fuel cell of the invention is higher than the operating temperature of the cell itself. By "operating temperature of the cell" is meant the operating temperature in the cathode region of the cell, for example adjacent to the membrane, or in the cathode chambers. The temperature of the regeneration zone during operation of the cell may be in excess of 80°C, or in excess of 90°C, or in excess of 95°C, or even in excess of 100°C, whereas typically the operating temperature of the cell will be less than about 80°C so as to avoid affecting membrane performance. Thus, temperatures of in excess of 80°C (for example in excess of 90°C, or 95°C or 100°C) may be produced in that portion of the catholyte solution which resides in the regeneration zone during the regeneration reaction. We have found that by causing the regeneration reaction to take place away from the cathode region of the cell, in the separately provided regeneration zone, and by careful selection of the operating volume and/or temperature of the regeneration zone with respect to membrane area of the cell, potentially adverse exposure to heat of the PEM can be avoided, which provides durability benefits for the MEA. In fact, by maintaining the regeneration zone at a higher operating temperature than that to which the polymer electrolyte membrane is subjected in operation of the cell, the heat of the regeneration reaction can even be used to improve heat transfer processes within the cell and between the cell and its external environment, with positive benefit in combined heat and power operation, in terms of efficiency of heat transfer (ie fraction of heat transferred for heating the home or other location). There are currently new developments in MEA technology leading to membranes which can withstand higher cell operating temperatures, for example 95°C or more. In any event, one of the purposes of the regeneration zone is to allow the temperature of the catholyte solution in regeneration to be higher than the temperature of the catholyte solution in reduction at the membrane interface, for example at least about 5°C, or 10°C or 15°C higher, whatever the operating temperature of the cell at the membrane may be.

The fuel cell of the invention when used in a chp application will typically be provided with heat transfer means associated with the regeneration zone for transferring heat from the regeneration zone to an external target such as a domestic or commercial boiler for example. Heat transfer means may work under standard principles of heat exchange, e.g. with close-contacting pipework, fins and vanes for increasing surface area contact between a cold pipe and a warm pipe, for example.

Similar principles will apply in connection with automotive and stationary applications, although in some such other applications the higher catholyte temperature requires a smaller heat exchange component to remove the heat.

In the fuel cell of the invention the operating temperature of the regeneration zone is at least 2°C higher than the operating temperature in the cathode region of the cell; preferably at least about 5°C higher; and most preferably at least about 10°C higher.

Preferably, the fuel cell of the invention comprises means for recovering heat from the regeneration zone.

It is also preferred that the fuel cell of the invention comprises means for supplying such recovered heat to a location outside of the cell.

The benefit of providing a higher operating temperature in the regeneration zone is twofold. In an application where the excess heat is in any event to be vented from the system (in an automotive application for example) the benefit arises from shielding the polymer electrolyte membrane from the heat generated in the regeneration reaction, with consequent improvement in the durability of cell performance. In an application where excess heat is to be put to a useful purpose (in a combined heat and power application for example) an additional benefit arises in connection with increased capture of the heat output from the fuel cell system. Since the efficiency of heat transfer from the cell is a function of the operating temperature of the cell or the regeneration zone thereof, a higher operating temperature gives rise to a more efficient transfer of heat from the cell.

Also discussed herein is a redox fuel cell comprising:
a plural stack of membrane electrode assemblies, each membrane electrode assembly comprising an anode and a cathode separated by an ion selective polymer electrolyte membrane, and each membrane electrode assembly comprising an anode chamber adjacent the anode of that assembly and a cathode chamber adjacent the cathode of that assembly;
means for supplying a fuel to the anode chambers of the cell;
means for supplying an oxidant to the cell;
means for providing an electrical circuit between respective anodes and cathodes of the cell;
a catholyte solution comprising at least one non-volatile catholyte component, the catholyte solution comprising a redox mediator couple; and
a regeneration zone separate from the membrane electrode assemblies, the means for supplying an oxidant to the cell being adapted to supply the oxidant to the regeneration zone.
a heat exchanger placed between the membrane electrode assemblies and the regenerator, such that heat is extracted from the catholyte solution (reducing the solution's temperature) before the catholyte flows into the regeneration zone. In this case, the temperature of the solution will still rise when passed through the regeneration zone, but the temperature of the catholyte in or just after the regeneration zone may not be higher than that in the cathode chamber. Further heat is extracted by the regenerator and by an optional heat exchanger located in the liquid flow after the regenerator. This may be a more convenient route for the overall heat extraction from the unit, or may favour the regeneration reaction.

The volume of catholyte solution in the regeneration zone in this case is preferably from about 25% to about 90% of the total combined volume of catholyte solution in the regeneration zone and the cathode chambers.

The fuel cell of the invention operates with a catholyte inventory in the regeneration zone of from 25% to 90% that of the catholyte inventory in the cathode chambers and the regeneration zone combined. Generally speaking, the volume of the regeneration zone may also occupy from 25% to 90% of the combined regeneration zone/cathode chamber volume, although it may be more in the event that the regeneration zone is not fully charged with catholyte. For example, it may be desirable to provide the regeneration zone with nebulisation means for finely dividing the catholyte and promoting its regeneration by greater surface area contact between catholyte and oxidant. However, in this case the volume of catholyte in the regeneration zone will clearly be considerably smaller than the volume of the regeneration zone itself.

The fuel cell of the invention preferably comprises: means for supplying at least partially reduced redox mediator couple from the cathode region of the cell to the regeneration zone; and means for supplying at least partially regenerated redox mediator couple from the regeneration zone to the cathode region.

The catholyte solution comprising the redox mediator couple therefore circulates in operation of the cell from the regeneration zone in at least partially regenerated (oxidised) form to the cathode region where it is at least partially reduced and thereafter returns to the regeneration zone where it reacts (directly or indirectly, when a redox catalyst is present) with the oxidant before returning to the cycle.

At any convenient location in the cycle one or more pumps may be provided to drive circulation of the catholyte solution. Preferably, at least one pump is situated between the downstream end of the regeneration zone and the upstream end of the cathode region.

Each cathode chamber preferably comprises one or more of: an inlet port for receiving at least partially regenerated redox mediator couple from the regeneration zone; and an outlet port for supplying at least partially reduced redox mediator couple to the regeneration zone.

The regeneration zone preferably comprises one or more of: a chamber in which the regeneration reaction takes place; a first inlet port for receiving into the chamber reduced redox mediator couple from the cathode region of the cell; a first outlet port for supplying oxidised redox mediator couple to the cathode region of the cell; a second inlet port for receiving a supply of oxidant; and a second outlet port for venting water vapour and heat from the chamber.

A condenser may be provided upstream of the second outlet port of the regeneration zone for condensing water vapour and, if desired, returning the condensed vapour to the regeneration zone.

The regeneration zone chamber itself provides a means of contacting the oxidant and the catholyte solution in order efficiently to reoxidize the redox mediator couple. If the oxidant is gaseous, such as air, various reactors may be used, for example, a stirred tank reactor, a fluidised bed reactor, a fixed bed reactor, an in-line mixing reactor, or an ejector. However it is desirable that the volume be small, both to keep the overall size of the fuel cell system small, and a relatively small volume regeneration zone will give rise to a higher temperature since the heat generated by the regeneration reaction is independent of the volume of the reaction mixture. A small volume will thus further increase the temperature of the regeneration zone. Two preferable reactors are in-line (or static) mixing reactors and ejectors based on their small volume relative to the mass transfer rate. This can be expressed as the product of the mass transfer coefficient and the surface area per unit volume (k_{L}a). values. Also a nebuliser creating a mist of droplets that are exposed to air then captured may be provided.

An in-line (or static) mixer consists of a means of providing a mixture of air and liquid, eg concentric tubes; then tube through which the mixture flows. Mixing elements which are designed to mix with shear are inserted in the tube. By flowing through the tube at an appropriate rate, intense mixing occurs of the two phases. Several elements may be used, adjacent to one another or separated from each other by a distance down the tube. The diameter of the element and its repeat distance are designed for the specific properties of the liquid, and gas and the flow rates of each. Typical examples of mixing elements are the SMV series from Sulzer.

An injector, ejector, steam ejector or steam injector is a pump-like device that uses the Venturi effect of a converging-diverging nozzle to convert the pressure energy of a motive fluid to velocity energy which creates a low pressure zone that draws in and entrains a suction fluid. After passing through the throat of the injector, the mixed fluid expands and the velocity is reduced which results in recompressing the mixed fluids by converting velocity energy back into pressure energy. The effect is an intense mixing of the liquid and gas phases in a small volume.

It will be appreciated that the fuel cell of the invention will typically comprise more than one membrane electrode assembly, each assembly separated by bipolar separation plates, in what is commonly known in the art as a fuel cell stack. It is contemplated within the scope of the invention to provide plural regeneration zones, with each regeneration zone receiving reduced redox mediator couple from a or some parts of the stack, and returning oxidised redox mediator couple to the same or different part or parts of the stack. However, commonly a single regeneration zone will serve the whole stack, or part of it.

The operation in redox terms of the fuel cell of the invention may be characterised as between the cathode region (stack) and the regeneration zone (regenerator) in accordance with the following scheme, in which the presence and function of the redox catalyst should be understood to be optional:

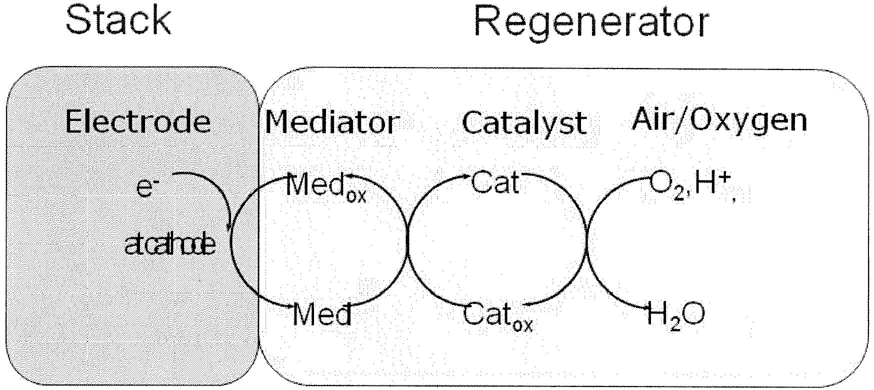

The redox mediator couple and/or the redox catalyst when present may comprise a polyoxometallate compound, as described in our co-pending PCT/GB2007/050151 (published as WO2007/110663).

The redox mediator couple and/or the redox catalyst when present may comprise a polyoxometallate compound with a divalent counterion, as described in our co-pending PCT/GB2008/050857 (published as WO2009/040577).

The redox mediator couple and/or the redox catalyst when present may comprise an N-donor compound, as described in our co-pending PCT/GB2007/050421 (published as WO2008/009993).

The redox mediator couple and/or the redox catalyst when present may comprise a multi-dentate N-donor ligand comprising at least one heterocyclic substituent selected from pyrrole, imidazole, 1,2,3-triazole, 1,2,4-triazole, pyrazole, pyridazine, pyrimidine, pyrazine, indole, tetrazole, quinoline, isoquinoline and from alkyl, alkenyl, aryl, cycloalkyl, alkaryl, alkenaryl, aralkyl, aralkenyl groups substituted with one or more of the aforesaid heterocyclic groups, as described in our co-pending PCT/GB2009/050065 (published as WO2009/093080).

The redox mediator couple and/or the redox catalyst when present may comprise a multidentate macrocyclic N-donor ligand, as described in our co-pending PCT/GB2009/050067 (published as WO2009/093082).

The redox mediator couple and/or redox catalyst when present may comprise a modified ferrocene species as described in our co-pending PCT/GB2007/050420 (published as WO2008/009992).

The redox mediator couple and/or redox catalyst when present may comprise a modified ferrocene species comprising a bridging unit between the cyclopentadienyl rings as described in our co-pending PCT/ GB2009/050066 (published as WO2009/093081).

Generally, the redox mediator couple will comprise a ligated transition metal complexes. Specific examples of suitable transition metals ions which can form such complexes include manganese in oxidation states II - V, Iron I-IV, copper I-III, cobalt I-III, nickel I-III, chromium (II-VII), titanium II-IV, tungsten IV-VI, vanadium II - V and molybdenum II-VI. Ligands can contain carbon, hydrogen, oxygen, nitrogen, sulphur, halides, phosphorus. Ligands may be chelating complexes include Fe/EDTA and Mn/EDTA, NTA, 2-hydroxyethylenediaminetriacetic acid, or non-chelating such as cyanide.

The fuel cell of the invention may operate straightforwardly with a redox couple catalysing in operation of the fuel cell the reduction of oxidant in the cathode chamber. However, in some cases, and with some redox couples, it may be necessary and/or desirable to incorporate a catalytic mediator in the catholyte solution.

In one preferred embodiment of the invention, the ion selective PEM is a cation selective membrane which is selective in favour of protons versus other cations.

The cation selective polymer electrolyte membrane may be formed from any suitable material, but preferably comprises a polymeric substrate having cation exchange capability. Suitable examples include fluororesin-type ion exchange resins and non-fluororesin-type ion exchange resins. Fluororesin-type ion exchange resins include perfluorocarboxylic acid resins, perfluorosulfonic acid resins, and the like. Perfluorocarboxylic acid resins are preferred, for example "Nafion" (Du Pont Inc.), "Flemion" (Asahi Gas Ltd),"Aciplex" (Asahi Kasei Inc), and the like. Non-fluororesin-type ion exchange resins include polyvinyl alcohols, polyalkylene oxides, styrenedivinylbenzene ion exchange resins, and the like, and metal salts thereof.

Preferred non-fluororesin-type ion exchange resins include polyalkylene oxide-alkali metal salt complexes. These are obtainable by polymerizing an ethylene oxide oligomer in the presence of lithium chlorate or another alkali metal salt, for example. Other examples include phenolsulphonic acid, polystyrene sulphonic, polytriflurostyrene sulphonic, sulphonated trifluorostyrene, sulphonated copolymers based on α,β,β triflurostyrene monomer, radiation-grafted membranes. Non-fluorinated membranes include sulphonated poly(phenylquinoxalines), poly (2,6 diphenyl-4-phenylene oxide), poly(arylether sulphone), poly(2,6-diphenylenol); acid-doped polybenzimidazole, sulphonated polyimides; styrene/ethylene-butadiene/styrene triblock copolymers; partially sulphonated polyarylene ether sulphone; partially sulphonated polyether ether ketone (PEEK); and polybenzyl suphonic acid siloxane (PBSS).

In some cases it may be desirable for the ion selective polymer electrolyte membrane to comprise a bi-membrane as described in our copending PCT/EP2006/060640 (published as WO2006/097438).

Also discussed herein is a process for operating a redox fuel cell comprising providing an anode and a cathode separated by an ion selective polymer electrolyte membrane; supplying a fuel to the anode region of the cell; supplying an oxidant to the cell; providing an electrical circuit between the anode and the cathode; providing a catholyte solution comprising at least one non-volatile catholyte component flowing in fluid communication with the cathode, the catholyte solution comprising a redox mediator couple being at least partially reduced at the cathode in the process of operation of the cell, and at least partially re-generated by reaction with the oxidant after such reduction at the cathode, the at least partial regeneration of the redox mediator couple being effected in a regeneration zone of the cell provided separate from the cathode region thereof, the oxidant being supplied to the regeneration zone, and maintaining the regeneration zone at a higher temperature than the cathode region of the cell.

It will be appreciated that the process of the invention may be used to operate to the fuel cell of the invention in all its various embodiments, preferences and alternatives, and that when this specification describes any feature of such a fuel cell it also specifically envisages that that feature may also be a preference or alternative process feature in the process of the invention.

The fuel cell of the invention may comprise a reformer configured to convert available fuel precursor such as LPG, LNG, gasoline or low molecular weight alcohols into a fuel gas (eg hydrogen) through a steam reforming reaction. The cell may then comprise a fuel gas supply device configured to supply the reformed fuel gas to the anode chamber

It may be desirable in certain applications of the cell to provide a fuel humidifier configured to humidify the fuel, eg hydrogen. The cell may then comprise a fuel supply device configured to supply the humidified fuel to the anode chamber.

An electricity loading device configured to load an electric power may also be provided in association with the fuel cell of the invention.

Preferred fuels include hydrogen; metal hydrides (for example borohydride which may act as a fuel itself or as a provider of hydrogen), ammonia, low molecular weight alcohols, aldehydes and carboxylic acids, sugars and biofuels as well as LPGLNG or gasoline.

### Preferred oxidants include air, oxygen and peroxides

The anode in the redox fuel cell of the invention may for example be a hydrogen gas anode or a direct methanol anode; other low molecular weight alcohols such as ethanol, propanol, dipropylene glycol; ethylene glycol; also aldehydes formed from these and acid species such as formic acid, ethanoic acid etc. In addition the anode may be formed from a bio-fuel cell type system where a bacterial species consumes a fuel and either produces a mediator which is oxidized at the electrode, or the bacteria themselves are adsorbed at the electrode and directly donate electrons to the anode.

The cathode in the redox fuel cell of the invention may comprise as cathodic material carbon, gold, platinum, nickel, metal oxide species. However, it is preferable that expensive cathodic materials are avoided, and therefore preferred cathodic materials include carbon, nickel and metal oxide. One preferable material for the cathodes is reticulated vitreous carbon or carbon fibre based electrodes such as carbon felt. Another is nickel foam. The cathodic material may be constructed from a fine dispersion of particulate cathodic material, the particulate dispersion being held together by a suitable adhesive, or by a proton conducting polymeric material. The cathode is designed to create maximum flow of catholyte solution to the cathode surface. Thus it may consist of shaped flow regulators or a three dimensional electrode; the liquid flow may be managed in a flow-by arrangement where there is a liquid channel adjacent to the electrode, or in the case of the three dimensional electrode, where the liquid is forced to flow through the electrode. It is intended that the surface of the electrode is also the electrocatalyst, but it may be beneficial to adhere the electrocatalyst in the form of deposited particles on the surface of the electrode.

The redox couple, and any other ancillary redox couple or catalyst, utilised in the fuel cell of the invention should be non-volatile, and is preferably soluble in aqueous solvent. Preferred redox couples should react with the oxidant at a rate effective to generate a useful current in the electrical circuit of the fuel cell, and react with the oxidant such that water is the ultimate end product of the reaction.

Also discussed herein is a process for operating a redox fuel cell comprising providing an anode in an anode chamber and a cathode in a cathode chamber separated by an ion selective polymer electrolyte membrane; supplying a fuel to the anode chamber of the cell; supplying an oxidant to the cell; providing an electrical circuit between the anode and the cathode; providing a catholyte solution comprising at least one non-volatile catholyte component flowing in fluid communication with the cathode, the catholyte solution comprising a redox mediator couple being at least partially reduced at the cathode in the process of operation of the cell, and at least partially re-generated by reaction with the oxidant after such reduction at the cathode, the at least partial regeneration of the redox mediator couple being effected in a regeneration zone of the cell provided separate from the cathode region thereof, the oxidant being supplied to the regeneration zone, and maintaining the volume of catholyte solution in the regeneration zone at from about 25% to about 90% of the combined volume of catholyte solution in the regeneration zone and in the cathode chamber.

Also discussed herein is a process for operating a redox fuel cell comprising providing an anode and a cathode separated by an ion selective polymer electrolyte membrane; supplying a fuel to the anode region of the cell; supplying an oxidant to the cell; providing an electrical circuit between the anode and the cathode; providing a catholyte solution comprising at least one non-volatile catholyte component flowing in fluid communication with the cathode, the catholyte solution comprising a redox mediator couple being at least partially reduced at the cathode in the process of operation of the cell, and at least partially re-generated by reaction with the oxidant after such reduction at the cathode, the at least partial regeneration of the redox mediator couple being effected in a regeneration zone of the cell provided separate from the cathode region thereof, the oxidant being supplied to the regeneration zone, and maintaining the regeneration zone at a higher temperature than the cathode region of the cell.

Also provided in accordance with the invention is the use of a fuel cell as described herein for the combined generation of heat and power.

Also provided in accordance with the invention is the use of a fuel cell as described herein to provide motive power to a vehicle.

Also in accordance with the invention is the use of a fuel cell as described herein as a source of power for stationary applications, such as back-up power for computer systems and mobile telephone masts; also as a source of power that replaces a diesel generator.

Also provided in accordance with the invention is the use of a fuel cell as described herein to generate power in an electronic component.

The invention also provides a combined heat and power system comprising at least one fuel cell as described herein.

The invention also provides a vehicle comprising at least one fuel cell as described herein.

The invention also provides an electronic component comprising at least one fuel cell as described herein.

Various aspects of the present invention will now be more particularly described with reference to the following figures which illustrate embodiments of the present invention:
Figure 1 illustrates a schematic view of a fuel cell in accordance with the present invention;
Figure 2 illustrates the potential and current output achieved during period of system self-powering of the unit described in Figure 1 and with reference to the Examples
Figure 3 illustrates POM temperatures measured across the regeneration zone during the period of system self-powering referred to in Figure 2.

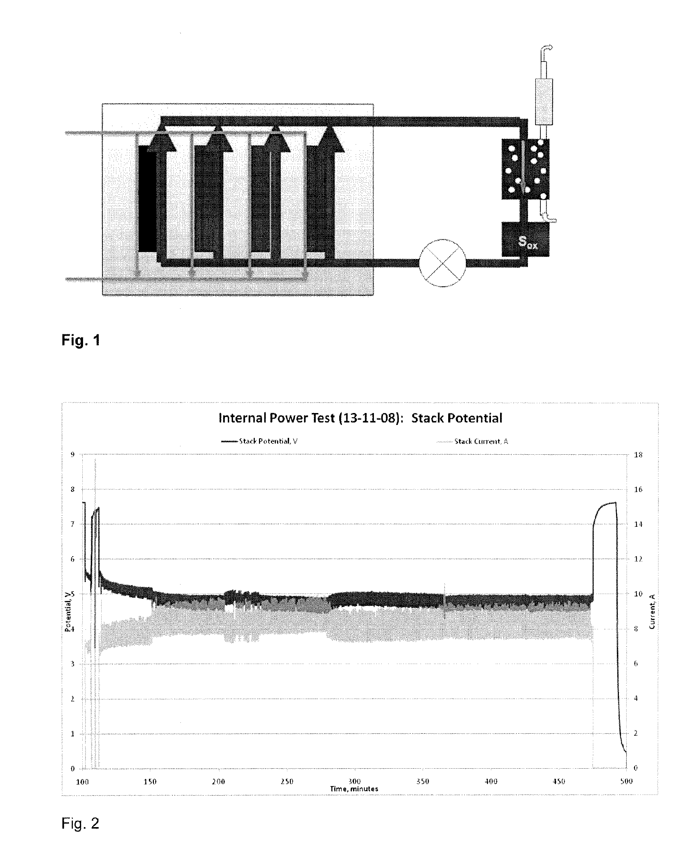

Referring to Figure 1, there is shown a fuel cell 1 in accordance with the invention. The cell comprises two major components: fuel cell stack 2 and regenerator section 3. Fuel stack 2 as illustrated comprises four ½ membrane electrode assemblies 4. Each ½ membrane electrode assembly comprises, towards the left as shown in Figure 1, an anode including gas diffusion layer and membrane; and, towards the right as shown in Figure 1, a cathode electrode. Each anode and each cathode are separated from each other by a polymer electrolyte membrane, the anode and membrane making up each half membrane electrode assembly and cathode 4. Each membrane electrode assembly and cathode 4 is separated from its neighbouring membrane electrode assembly and cathode by a bipolar plate which, , will comprise flow channels for allowing fuel (in the case of the anode side) to diffuse across the electrode surface in operation of the cell and a well to site the cathode electrode and catholyte (in the case of the cathode side), in a manner which is well known in the art. At each end of the fuel cell stack unipolar separating plates are provided (meaning that diffusion channels are provided on only one side thereof for the anode; the side facing the electrode, and a cathode well for the cathode). Figure 1 does not attempt to show these plates, since their configuration, assembly and function are well known in the art.

Fuel channels 5 are schematically shown in Figure 1 and the arrows indicate the direction of fuel flow around the cell. Catholyte channels 6 are schematically shown in Figure 1 and the arrows indicate the direction of catholyte flow around the cell.

Catholyte is supplied to the fuel stack in line 5a through recycle pump 7 and is recovered in line 5b, the redox mediator couple component of the catholyte having been at least partially reduced at the cathode in operation of the cell. The catholyte containing at least partially reduced redox mediator couple is recovered in line 5b and supplied to regeneration chamber 8 through first inlet port 9. Regeneration chamber 8 is further supplied in second inlet port 10 with a flow of oxidant; in this case air. The redox couple flowing in solution in the regeneration chamber in operation of the cell is used in the invention as a catalyst for the reduction of oxygen, in accordance with the following (wherein Sp is the redox couple species):

O₂ + 4Sp_{red} + 4H⁺ → 2H₂O + 4Spₒₓ

The heat generated in this reaction causes the temperature of the catholyte in the regeneration chamber to rise above the temperature of the catholyte in the fuel cell stack.

Catholyte solution containing regenerated oxidised redox couple is recovered from regeneration chamber 8 through first outlet port 11 and may be supplied directly into line 5a through recycle pump 6 or, as illustrated in Figure 1, may be at first supplied to a holding reservoir 12. The use of a holding reservoir may be particularly useful in allowing the manufacturer to minimise the volume of regeneration chamber 8, thereby ensuring a higher temperature rise (relative to a larger regeneration chamber) therein in operation of the cell. Water vapour produced in the regeneration reaction is vented through second outlet port 13, and may be vented from the system (and used in a further heat generating capacity) in line 14. Alternatively, or as well, some or all of the water vapour may be condensed in condenser 15 and returned to the catholyte solution in order to assist in maintaining the humidity balance in the cell.

In operation of the cell, electrons generated at the anode by the oxidation of fuel gas flow in an electrical circuit (not shown) and are returned to the cathode, in a manner well known.

Regeneration chamber 8 may suitably be formed from a static mixer or an injector type device, for example

The following Example further illustrates the potential benefit of the fuel cell of the invention.

### Example 1

A 50W unit was designed and built based in accordance with Figure 1 The system consisted of a regulated hydrogen supply line and a recirculating POM catholyte loop containing pump, 10 cell stack (5 x 5 cm cells) and regenerator, plus condenser. The system included flow and pressure and control for the hydrogen supply, and flow and pressure and temperature monitoring for the catholyte and air line. A plc was used to control the system. The purpose of the regenerator was to re-oxidise the POM following its chemical reduction within the stack. The regenerator was based on the crossflow bubble column principle and consisted of a 1.1 L chamber fitted with a porous sintered glass base. Pumping air up through the sinter generated bubbles within the overlying POM flow and thus surface area for oxygen mass transfer.

The below described test was carried out to provide evidence of an exothermic regeneration reaction.

### Self-powering and Thermally Self-sustained Operation of the 50W unit

### Methodology

In order to minimise system heat losses, the POM circuit was thermally lagged using glass fibre insulation material. The circulating POM temperature was then raised to ∼75°C using an external heater. During warm-up, power supplied to the system's internal load was derived via a battery. On reaching temperature, external heater and battery support were withdrawn and the stack engaged as the sole source of system power (a scrolling LED sign also powered). Self-powered system performance was then monitored for approximately 6 h. Test flow rates were set as follows: ∼0.8 L/min POM recirculation and ∼4.7 L/min regenerator air delivery. The catholyte circuit contained ∼0.6L of POM, with 50 cm³ of the catholyte contained within the stack, and 450 cm³ in the regenerator.

### Results

*Figure* 2 shows the stack potential and current output over the duration of the experiment. Power generation was shown to be sufficiently responsive to flucuating demand. Power fluctuations were due to cyclical LED sign demand, periodic actuation of valves (H₂ purge and condensate return) and periodic activation of condenser fan. Within this context, stable power demand and generation was achieved.

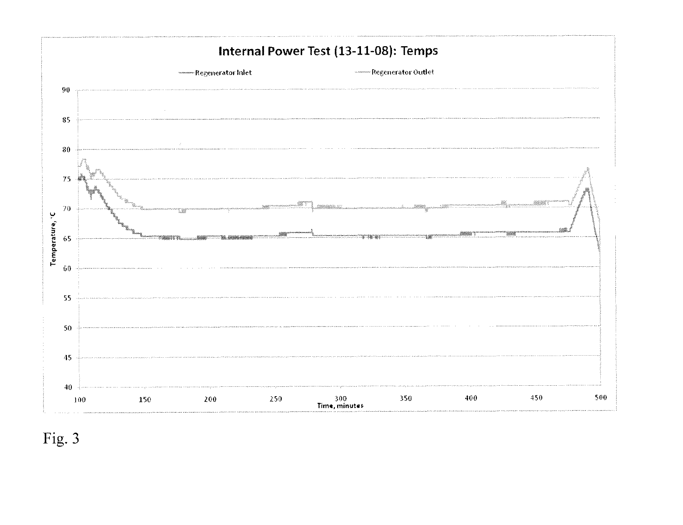

The stack was demonstrated to supply an average current of 8.2A at a potential of 4.8V. This led to an average hydrogen supply flow rate of average 0.8 L/min. At this potential the power generation reaction was calculated to be ∼40% efficient (i.e. 4.8V/12.3V x 100). Hence assuming an electrical output of 40W, this would suggest the co-generation of ∼60W of heat. *Figure 3* shows the POM temperature recorded at the inlet to the regenerator, close to the exit of the fuel cell stack at 65°C and at the exit of the regenerator at 70°C.

### Conclusions

The occurrence of the reaction of the polyoxometallate catalyst/mediator system with oxygen in the regenerator was demonstrated by the detection of 5°C temperature increase across regenerator, the inlet temperature of the regenerator being representative of the outlet of the stack. The regenerator designs of the invention have smaller relative volumes of catholyte, thus much greater temperature differences between the regenerator and cell will be obtained.

## Claims

1. A redox fuel cell comprising:
a plural stack of membrane electrode assemblies, each membrane electrode assembly comprising an anode and a cathode separated by an ion selective polymer electrolyte membrane, and each membrane electrode assembly comprising an anode chamber adjacent the anode of that assembly and a cathode chamber adjacent the cathode of that assembly;
means for supplying a fuel to the anode chambers of the cell;
means for supplying an oxidant to the cell;
means for providing an electrical circuit between respective anodes and cathodes of the cell;
a catholyte solution comprising at least one non-volatile catholyte component, the catholyte solution comprising a redox mediator couple;
means upstream and/or downstream of the cathode chambers for cooling the catholyte solution; and
a regeneration zone separate from the membrane electrode assemblies, the means for supplying an oxidant to the cell being adapted to supply the oxidant to the regeneration zone, the regeneration zone being maintained in operation of the cell at an operating temperature at least 2°C higher than the cathode chambers of the cell and/or the temperature of the cooled catholyte solution, wherein the catholyte inventory in the regeneration zone is from 25% to 90% that of the catholyte inventory in the cathode chambers and the regeneration zone combined.

2. The fuel cell according to claim 1 further comprising means for recovering heat from the regeneration zone.

3. The fuel cell of claim 2 further comprising means for supplying the recovered heat to a location outside of the cell.

4. The fuel cell according to any one of claims 1 to 3 wherein each cathode chamber comprises an inlet port for receiving at least partially regenerated redox mediator couple from the regeneration zone; and an outlet port for supplying at least partially reduced redox mediator couple to the regeneration zone.

5. The fuel cell according to any one of claims 1 to 4 wherein the regeneration zone comprises:
a chamber in which the regeneration reaction takes place;
a first inlet port for receiving into the chamber reduced redox mediator couple from the cathode region of the cell;
a first outlet port for supplying oxidised redox mediator couple to the cathode region of the cell; and/or
a second inlet port for receiving a supply of oxidant; and a second outlet port for venting water vapour and heat from the chamber.

6. The fuel cell according to claim 5 further comprising a condenser provided upstream of the second outlet port of the regeneration zone for condensing water vapour and, optionally, returning the condensed vapour to the regeneration zone.

7. The fuel cell according to any one of claims 1 to 6 wherein the catholyte solution further comprises a redox catalyst for assisting electron transfer between the oxidant and the at least partially reduced redox mediator couple.

8. The fuel cell according to any one of claims 1 to 7 wherein the redox mediator couple and/or the redox catalyst when present comprises:
a polyoxometallate compound;
a polyoxometallate compound with a divalent counterion;
an N-donor compound;
a multi-dentate N-donor ligand comprising at least one heterocyclic substituent selected from pyrrole, imidazole, 1,2,3-triazole, 1,2,4-triazole, pyrazole, pyridazine, pyrimidine, pyrazine, indole, tetrazole, quinoline, isoquinoline and from alkyl, alkenyl, aryl, cycloalkyl, alkaryl, alkenaryl, aralkyl, aralkenyl groups substituted with one or more of the aforesaid heterocyclic groups;
a multidentate macrocyclic N-donor ligand;
a modified ferrocene species;
a modified ferrocene species comprising a bridging unit between the cyclopentadienyl rings; and/or
a ligated transition metal complex.

9. A fuel cell according to any one of claims 1 to 8 wherein the volume of catholyte solution in the regeneration zone is from 25% to 85% of the total combined volume of catholyte solution in the regeneration zone and the cathode chambers.

10. A process for operating a redox fuel cell comprising:
providing a plural stack of membrane electrode assemblies, each membrane electrode assembly comprising an anode and a cathode separated by an ion selective polymer electrolyte membrane, and each membrane electrode assembly comprising an anode chamber adjacent the anode of that assembly and a cathode chamber adjacent the cathode of that assembly;
providing a catholyte solution comprising at least one non-volatile catholyte component, the catholyte solution comprising a redox mediator couple;
providing a regeneration zone separate from the membrane electrode assemblies;
providing means between the cathode chambers and the regeneration zone for cooling the catholyte solution;
supplying an oxidant to the regeneration zone;
supplying a fuel to the anode chambers of the cell;
providing an electrical circuit between respective anodes and cathodes of the cell; and
maintaining the regeneration zone at an operating temperature at least 2°C higher than the cathode chambers of the cell and/or the temperature of the cooled catholyte solution.

11. The process according to claim 10 wherein the regeneration zone is maintained at a temperature of at least 70°C.

12. The process according to claim 10 or 11 wherein the regeneration zone is maintained at a temperature at least 5°C higher than the operating temperature in the cathode region of the cell and/or the temperature of the cooled catholyte solution.

13. Use of a fuel cell according to any one of claims 1 to 9:
a. for the combined generation of heat and power;
b. to provide motive power to a vehicle; or
c. to generate power in an electronic component.

14. A combined heat and power system, a vehicle or an electronic component comprising at least one fuel cell according to any one of claims 1 to 9.

## Patentansprüche

1. Redox-Brennstoffzelle, die Folgendes umfasst:
einen vielfachen Stapel an Membran-Elektroden-Einheiten, wobei jede Membran-Elektroden-Einheit eine Anode und eine Kathode umfasst, die durch eine ionenselektive Polymer-Elektrolyt-Membran getrennt sind, und jede Membran-Elektroden-Einheit eine Anodenkammer, die an die Anode dieser Einheit angrenzt, und eine Kathodenkammer, die an die Kathode dieser Einheit angrenzt, umfasst;
Mittel für die Zufuhr eines Brennstoffs zu den Anodenkammern der Zelle;
Mittel für die Zufuhr eines Oxidationsmittels zur Zelle;
Mittel für die Bereitstellung eines elektrischen Stromkreises zwischen den jeweiligen Anoden und Kathoden der Zelle;
eine Katholytlösung, die mindestens eine nichtflüchtige Katholytkomponente umfasst, wobei die Katholytlösung ein vermittelndes Redoxpaar umfasst;
Mittel, die den Kathodenkammern vorgeschaltet und/oder nachgeschaltet sind, zum Kühlen der Katholytlösung; und
eine Regenerationszone, die von den Membran-Elektroden-Einheiten getrennt ist,
wobei die Mittel für die Zufuhr eines Oxidationsmittels zur Zelle geeignet sind, das Oxidationsmittel der Regenerationszone zuzuführen, wobei die Regenerationszone beim Betreiben der Zelle bei einer Betriebstemperatur von mindestens 2°C höher als die Kathodenkammern der Zelle und/oder die Temperatur der gekühlten Katholytlösung gehalten wird, worin der Katholytbestand in der Regenerationszone von 25 % bis 90 % von dem des Katholytbestands in den Kathodenkammern und der Regenerationszone vereint beträgt.

2. Brennstoffzelle nach Anspruch 1, die weiter Mittel für die Rückgewinnung von Wärme aus der Regenerationszone umfasst.

3. Brennstoffzelle nach Anspruch 2, die weiter Mittel für die Zufuhr der zurückgewonnenen Wärme zu einem Ort außerhalb der Zelle umfasst.

4. Brennstoffzelle nach einem der Ansprüche 1 bis 3, worin jede Kathodenkammer Folgendes umfasst: eine Einlassöffnung für die Aufnahme von zumindest teilweise regeneriertem vermittelndem Redoxpaar aus der Regenerationszone und eine Auslassöffnung für die Zufuhr von zumindest teilweise reduziertem vermittelndem Redoxpaar zur Regenerationszone.

5. Brennstoffzelle nach einem der Ansprüche 1 bis 4, worin die Regenerationszone Folgendes umfasst:
eine Kammer, in der die Reaktion der Regeneration stattfindet;
eine erste Einlassöffnung für die Aufnahme in die Kammer von reduziertem vermittelndem Redoxpaar aus dem Kathodenbereich der Zelle;
eine erste Auslassöffnung für die Zufuhr von oxidiertem vermittelndem Redoxpaar zum Kathodenbereich der Zelle; und/oder
eine zweite Einlassöffnung für die Aufnahme einer Zufuhr an Oxidationsmittel;
und eine zweite Auslassöffnung für die Entlüftung von Wasserdampf und Wärme aus der Kammer.

6. Brennstoffzelle nach Anspruch 5, die weiter einen Kondensator, der der zweiten Auslassöffnung der Regenerationszone vorgeschaltet bereitgestellt wird, zum Kondensieren von Wasserdampf und optional Rückführen des kondensierten Dampfes zur Regenerationszone umfasst.

7. Brennstoffzelle nach einem der Ansprüche 1 bis 6, worin die Katholytlösung weiter einen Redoxkatalysator zur Unterstützung des Elektronentransfers zwischen dem Oxidationsmittel und dem zumindest teilweise reduzierten vermittelnden Redoxpaar umfasst.

8. Brennstoffzelle nach einem der Ansprüche 1 bis 7, worin das vermittelnde Redoxpaar und/oder der Redoxkatalysator, wenn vorliegend, Folgendes umfassen:
eine Polyoxometallatverbindung;
eine Polyoxometallatverbindung mit einem divalenten Gegenion;
eine N-Donorverbindung;
einen mehrzähnigen N-Donorliganden, der mindestens einen heterocyclischen Substituenten umfasst, der aus Folgenden ausgewählt ist: Pyrrol, Imidazol, 1,2,3-Triazol, 1,2,4-Triazol, Pyrazol, Pyridazin, Pyrimidin, Pyrazin, Indol, Tetrazol, Chinolin, Isochinolin und aus Alkyl-, Alkenyl-, Aryl-, Cycloalkyl-, Alkaryl-, Alkenaryl-, Aralkyl-, Aralkenylgruppen, die mit einer oder mehreren der vorbenannten heterocyclischen Gruppen substituiert sind;
einen mehrzähnigen makrocyclischen N-Donorliganden;
eine modifizierte Ferrocenspezies;
eine modifizierte Ferrocenspezies, die eine überbrückende Einheit zwischen den Cyclopentadienylringen umfasst; und/oder
einen gebundenen Übergangsmetallkomplex.

9. Brennstoffzelle nach einem der Ansprüche 1 bis 8, worin das Volumen der Katholytlösung in der Regenerationszone von 25 % bis 85 % des gesamten vereinten Volumens der Katholytlösung in der Regenerationszone und den Kathodenkammern beträgt.

10. Verfahren zum Betreiben einer Redox-Brennstoffzelle, das Folgendes umfasst:
Bereitstellen eines vielfachen Stapels an Membran-Elektroden-Einheiten, wobei jede Membran-Elektroden-Einheit eine Anode und eine Kathode umfasst, die durch eine ionenselektive Polymer-Elektrolyt-Membran getrennt sind, und jede Membran-Elektroden-Einheit eine Anodenkammer, die an die Anode dieser Einheit angrenzt, und eine Kathodenkammer, die an die Kathode dieser Einheit angrenzt, umfasst;
Bereitstellen einer Katholytlösung, die mindestens eine nichtflüchtige Katholytkomponente umfasst, wobei die Katholytlösung ein vermittelndes Redoxpaar umfasst;
Bereitstellen einer Regenerationszone, die von den Membran-Elektroden-Einheiten getrennt ist;
Bereitstellen von Mitteln zwischen den Kathodenkammern und der Regenerationszone zum Kühlen der Katholytlösung;
Zuführen eines Oxidationsmittels zur Regenerationszone;
Zuführen eines Brennstoffs zu den Anodenkammern der Zelle;
Bereitstellen eines elektrischen Stromkreises zwischen den jeweiligen Anoden und Kathoden der Zelle; und
Aufrechterhalten der Regenerationszone bei einer Betriebstemperatur von mindestens 2°C höher als die Kathodenkammern der Zelle und/oder die Temperatur der gekühlten Katholytlösung.

11. Verfahren nach Anspruch 10, worin die Regenerationszone bei einer Temperatur von mindestens 70°C gehalten wird.

12. Verfahren nach Anspruch 10 oder 11, worin die Regenerationszone bei einer Temperatur von mindestens 5°C höher als die Betriebstemperatur im Kathodenbereich der Zelle und/oder die Temperatur der gekühlten Katholytlösung gehalten wird.

13. Verwendung einer Brennstoffzelle nach einem der Ansprüche 1 bis 9:
a. für die kombinierte Erzeugung von Wärme und Strom;
b. um Antriebskraft für ein Fahrzeug bereitzustellen; oder
c. um Strom in einer elektronischen Komponente zu erzeugen.

14. Kombiniertes Wärme- und Stromsystem, ein Fahrzeug oder eine elektronische Komponente, das/die mindestens eine Brennstoffzelle nach einem der Ansprüche 1 bis 9 umfasst.

## Revendications

1. Pile à combustible rédox comprenant :
une pile de plusieurs ensembles d'électrodes à membrane, chaque ensemble d'électrodes à membrane comprenant une anode et une cathode séparées par une membrane électrolyte polymère ionosélective, et chaque ensemble d'électrodes à membrane comprenant une chambre d'anode adjacente à l'anode de cet ensemble et une chambre de cathode adjacente à la cathode de cet ensemble ;
un moyen d'alimentation de combustible dans les chambres d'anodes de la pile ;
un moyen d'alimentation d'oxydant dans la pile ;
un moyen de fourniture d'un circuit électrique entre des anodes et cathodes respectives de la pile ;
une solution de catholyte comprenant au moins un composant catholyte non volatile, la solution de catholyte comprenant un couple médiateur d'oxydoréduction ;
des moyens en amont et/ou en aval des chambres de cathodes pour refroidir la solution de catholyte ; et
une zone de régénération séparée des ensembles d'électrodes à membrane, le moyen d'alimentation d'oxydant dans la pile étant adapté pour alimenter l'oxydant dans la zone de régénération, la zone de régénération étant maintenue durant le fonctionnement de la pile à une température opérationnelle d'au moins 2°C de plus que les chambres de cathodes de la pile et/ou que la température de la solution de catholyte refroidie, dans laquelle le stock de catholyte dans la zone de régénération constitue 25% à 90% de celui du stock de catholyte dans les chambres de cathodes et la zone de régénération combinées.

2. Pile à combustible selon la revendication 1, comprenant en outre un moyen de récupération de chaleur depuis la zone de régénération.

3. Pile à combustible selon la revendication 2, comprenant en outre un moyen de fourniture de la chaleur récupérée à un emplacement extérieur à la pile.

4. Pile à combustible selon l'une quelconque des revendications 1 à 3, dans laquelle chaque chambre de cathode comprend un orifice d'admission pour recevoir un couple médiateur d'oxydoréduction au moins partiellement régénéré depuis la zone de régénération ; et un orifice de sortie pour fournir un couple médiateur d'oxydoréduction au moins partiellement réduit à la zone de régénération.

5. Pile à combustible selon l'une quelconque des revendications 1 à 4, dans laquelle la zone de régénération comprend :
une chambre dans laquelle prend place la réaction de régénération ;
un premier orifice d'admission pour recevoir dans la chambre un couple médiateur d'oxydoréduction réduit depuis la région de cathode de la pile ;
un premier orifice de sortie pour fournir un couple médiateur d'oxydoréduction oxydé à la région de cathode de la pile ; et/ou
un second orifice d'admission pour recevoir une alimentation d'oxydant ; et un second orifice de sortie pour ventiler hors de la chambre la vapeur d'eau et la chaleur.

6. Pile à combustible selon la revendication 5, comprenant en outre un condenseur fourni en amont du second orifice de sortie de la zone de régénération pour condenser la vapeur d'eau et, facultativement, renvoyer la vapeur condensée à la zone de régénération.

7. Pile à combustible selon l'une quelconque des revendications 1 à 6, dans laquelle la solution de catholyte comprend en outre un catalyseur d'oxydoréduction pour aider au transfert d'électrons entre l'oxydant et le couple médiateur d'oxydoréduction au moins partiellement réduit.

8. Pile à combustible selon l'une quelconque des revendications 1 à 7, dans laquelle le couple médiateur d'oxydoréduction et/ou le catalyseur d'oxydoréduction quand il est présent comprend :
un composé de polyoxométallate ;
un composé de polyoxométallate avec un contre-ion divalent ;
un composé donneur d'azote ;
un ligand donneur d'azote polydenté comprenant au moins un substituant hétérocyclique sélectionné parmi pyrrole, imidazole, 1,2,3-triazole, 1,2,4-triazole, pyrazole, pyridazine, pyrimidine, pyrazine, indole, tétrazole, quinoléine, isoquinoléine et parmi des groupes alkyle, alcényle, aryle, cycloalkyle, alkaryle, alcénaryle, aralkyle, aralcényle substitués par un ou plusieurs des groupes hétérocycliques susdits ;
un ligand donneur d'azote polydenté macrocyclique;
une espèce de ferrocène modifié ;
une espèce de ferrocène modifié comprenant une unité de pontage entre les cycles cyclopentadiényles ; et/ou
un complexe de métal de transition lié.

9. Pile à combustible selon l'une quelconque des revendications 1 à 8, dans laquelle le volume de solution de catholyte dans la zone de régénération constitue 25% à 85% du volume combiné total de la solution de catholyte dans la zone de régénération et les chambres de cathodes.

10. Processus d'exploitation d'une pile à combustible rédox comprenant :
la fourniture d'une pile de plusieurs ensembles d'électrodes à membrane, chaque ensemble d'électrodes à membrane comprenant une anode et une cathode séparées par une membrane électrolyte polymère ionosélective, et chaque ensemble d'électrodes à membrane comprenant une chambre d'anode adjacente à l'anode de cet ensemble et une chambre de cathode adjacente à la cathode de cet ensemble ;
la fourniture d'une solution de catholyte comprenant au moins un composant catholyte non volatile, la solution de catholyte comprenant un couple médiateur d'oxydoréduction ;
la fourniture d'une zone de régénération séparée des ensembles d'électrodes à membrane ;
la fourniture de moyens entre les chambres de cathodes et la zone de régénération pour refroidir la solution de catholyte ;
l'alimentation d'un oxydant dans la zone de régénération ;
l'alimentation d'un combustible dans les chambres d'anodes de la pile ;
la fourniture d'un circuit électrique entre des anodes et cathodes respectives de la pile ; et
le maintien de la zone de régénération à une température opérationnelle d'au moins 2°C de plus que les chambres de cathodes de la pile et/ou que la température de la solution de catholyte refroidie.

11. Processus selon la revendication 10, dans lequel la zone de régénération est maintenue à une température d'au moins 70°C.

12. Processus selon la revendication 10 ou 11, dans lequel la zone de régénération est maintenue à une température d'au moins 5°C de plus que la température opérationnelle dans la région de cathode de la pile et/ou la température de la solution de catholyte refroidie.

13. Utilisation d'une pile à combustible selon l'une quelconque des revendications 1 à 9 :
a. pour la génération combinée de chaleur et de puissance ;
b. pour fournir une puissance motrice à un véhicule ; ou
c. pour générer une puissance dans un composant électronique.

14. Système de chaleur et de puissance combiné, véhicule ou composant électronique comprenant au moins une pile à combustible selon l'une quelconque des revendications 1 à 9.
